# EUROPÄISCHE PATENTSCHRIFT

(11) **EP 4 166 429 B1**
(45) Veröffentlichungstag und Bekanntmachung des Hinweises auf die Patenterteilung: **03.12.2025**
(21) Anmeldenummer: 22199653.1
(22) Anmeldetag: 04.10.2022
(51) Int. Cl.: B62D 33/067, B62D 33/073, B60R 16/02

(54) **NUTZFAHRZEUG MIT KIPPBAREM FAHRERHAUS**
COMMERCIAL VEHICLE WITH TILTABLE CAB
VÉHICULE UTILITAIRE AVEC CABINE BASCULANTE

(30) Priorität: 13.10.2021 DE 102021126502
(43) Veröffentlichungstag der Anmeldung: 19.04.2023
(73) Patentinhaber: MAN Truck & Bus SE, 80995 München (DE)
(72) Erfinder: Jochum, Christina, 80995 München (DE)
(74) Vertreter: v. Bezold & Partner Patentanwälte - PartG mbB

(56) Entgegenhaltungen:
- EP-A1- 2 669 152
- WO-A1-2009/041862
- WO-A1-2014/070075
- WO-A1-2018/048334
- JP-A- 2000 198 396
- US-A- 3 847 244

## Beschreibung

Die Erfindung betrifft ein Nutzfahrzeug umfassend ein Fahrzeug-Chassis, ein Fahrerhaus und eine Kippeinrichtung mittels der das Fahrerhaus kippbar gelagert ist.

Aus der Praxis sind Nutzfahrzeuge, insbesondere Zugmaschinen, bekannt, die ein kippbares Fahrerhaus relativ zu deren Chassis aufweisen. Falls Wartungs- oder Reparaturarbeiten an Komponenten unterhalb des Fahrerhauses notwendig werden, zum Beispiel am Motor oder anderen Antriebselementen des Nutzfahrzeugs, lässt sich das Fahrerhaus über einen Kippmechanismus in einem vorderen Bereich des Fahrerhauses kippen, sodass die Komponenten unterhalb des Fahrerhauses zugänglich werden.

Aus der Praxis ist bekannt, dass Versorgungsleitungen, z. B. elektrische und/oder pneumatische Leitungen zwischen Fahrerhaus und Chassis über den Fahrerhaus-Drehpunkt bzw. die Kippachse geführt sind, um die Kippbarkeit des Fahrerhaus trotz dieser Leitungen zu ermöglichen. Hierbei handelt es sich häufig um die für die Steuerung wichtigen pneumatischen und elektrischen Verbindungsleitungen eines Nutzfahrzeugs. Beispielsweise offenbart das Dokument WO 2014/070075 A1 ein Nutzfahrzeug mit einer Mechanik, die zum Kippen eines Fahrerhauses geeignet ist, und die Leitungsführung über den Kippmechanismus erfolgt. Nachteilig ist die dadurch bedingte lange Leitungsführung. Ferner ist nachteilig, dass ich Bereich der Kippachse ohnehin wenig freier Bauraum zur Verfügung steht. Ferner können Verbindungsleitungen bei jedem Kippvorgang mechanisch beansprucht werden, sodass Ermüdungserscheinungen auftreten können.

Die JP 2000 198396 A schlägt einen Kabelbaum, der eine Kabinenseite mit einer Fahrgestellseite elektrisch verbindet, vor, der derart geteilt wird, dass ein Teil an der Scharnierseite und ein Teil an der Kippseite eines kippbaren Fahrerhauses angeordnet ist. Zwischen dem kabinenseitigen und dem kippseitigen Kabelbaum sind Steckverbinder eingefügt. Auf der Kippseite wird das Verbindungstück beim Hochkippen automatisch geteilt, um zu verhindern, dass der Kabelbaum durchtrennt wird.

Es ist somit eine Aufgabe der Erfindung eine verbesserte Technik für das Bereitstellen von Versorgungsleitungen zwischen einem kippbaren Fahrerhaus und dem Fahrzeug-Chassis bereitzustellen, mit der Nachteile herkömmlicher Techniken vermieden werden können.

Diese Aufgabe wird durch ein Nutzfahrzeug mit den Merkmalen des unabhängigen Anspruchs 1 gelöst. Vorteilhafte Weiterbildungen sind in den abhängigen Ansprüchen und der Beschreibung angegeben.

Gemäß einem ersten allgemeinen Gesichtspunkt der Erfindung wird ein Nutzfahrzeug bereitgestellt. Dieses umfasst ein Fahrzeug-Chassis, ein Fahrerhaus und eine Kippeinrichtung, mittels der das Fahrerhaus über eine Kippachse auf dem Chassis für Wartungs- , Reparatur- und/oder Montagearbeiten kippbar gelagert ist. Ferner umfasst das Nutzfahrzeug mindestens eine Versorgungsleitung, wobei die Versorgungsleitung einen ersten Abschnitt, der am Fahrzeug-Chassis angeordnet ist, und einen zweiten Abschnitt, der am Fahrerhaus angeordnet ist, aufweist. Das Nutzfahrzeug umfasst ferner eine Verbindungseinrichtung zum lösbaren Miteinander-Verbinden des ersten und zweiten Abschnitts, wobei ein fahrerhausseitiger Teil der Verbindungseinrichtung in einer hinteren Hälfte, vorzugsweise in einem hinteren Drittel, weiter vorzugweise in einem hinteren Endbereich, des Fahrerhauses angeordnet ist.

Dies bietet den Vorteil, dass eine Entspannung der Platzverhältnisse im Bereich der Kippachse erfolgt, in dem bisher üblich die Leitungsführung erfolgte. Ferner werden auf diese Weise auch vorteilhaft die benötigten Längen der Versorgungsleitungen reduziert und damit die Produktionskosten gesenkt, weil unvorteilhafte Umwege der Versorgungsleitungen über die Kippachse vermieden werden.

Die Verbindungseinrichtung ist vorzugsweise ausgebildet, wahlweise den Fahrzeug-Chassisseitig angeordneten ersten Abschnitt der Versorgungsleitung mit dem Fahrerhaus-seitig angeordneten zweiten Abschnitt der Versorgungsleitung zu verbinden, falls sich das Fahrerhaus im nicht-gekippten Zustand befindet, und die Verbindung vom ersten und zweiten Abschnitt zu lösen, um eine Kippbewegung des Fahrerhauses ausführen zu können. Das Trennen und Lösen der Verbindung mittels der Verbindungseinrichtung automatisiert oder manuell, d.h. durch einen Benutzer, erfolgen.

Das Fahrzeug-Chassis, oder auch kurz Chassis genannt, kann ein Fahrgestell sein, aufweisend zwei über mehrere Querträger verbundene Rahmen-Längsträger. Das Chassis kann auch als Fahrzeugrahmen oder auch Leiterrahmen des Nutzfahrzeugs verstanden werden, welcher unter anderem Motor, Getriebe und im allgemeinen Antriebskomponenten und Aufbauten trägt beziehungsweise aufnimmt. Der Begriff "hinten" in Bezug auf das Fahrerhaus bezieht sich auf die zur Vorwärtsfahrtrichtung des Nutzfahrzeugs entgegengesetzte Richtung.

Die Kippeinrichtung kann in an sich bekannter Weise ausgeführt sein, beispielsweise ansteuerbare hydraulisch oder pneumatisch betätigte Aktoren zur Erzeugung einer Kippkraft aufweisen, um ein Kippen des Fahrerhauses relativ zum Chassis zu ermöglichen. Die mindestens eine Versorgungsleitung kann mindestens eine elektrische Leitung, eine hydraulische Leitung und/oder eine pneumatische Leitung umfassen.

In einer besonders bevorzugten Ausführungsform kann der fahrerhausseitige Teil der Verbindungseinrichtung an einer Fahrerhausrückseite, vorzugsweise an einem unteren Endbereich der Fahrerhausrückseite angeordnet sein. Dies bietet den Vorteil, dass die Verbindungseinrichtung leicht zugänglich ist und generell mehr Platz für eine konstruktive Ausgestaltung der Verbindungseinrichtung vorhanden ist. Der untere Endbereich der Fahrerhausrückseite ist in Bezug zur Fahrzeughöhenrichtung zu sehen.

Alternativ kann der fahrerhausseitige Teil der Verbindungseinrichtung an einer Unterseite des Fahrerhauses angeordnet sein. Dies bietet den Vorteil, dass die Verbindungseinrichtung gut vor äußeren Witterungsbedingungen geschützt ist.

Nach einem weiteren Aspekt der Erfindung kann die Verbindungseinrichtung eine Steck- und/oder Rastverbindung zum lösbaren Miteinander-Verbinden des ersten und zweiten Abschnitts umfassen. Dadurch kein ein einfach zu realisierender Verbindungsmechanismus bereitgestellt werden. Die Steck- und/oder Rastverbindung kann als manuell betätigbare Steck- und/oder Rastverbindung ausgeführt sein, d. h. ein Benutzer kann die Steck- und/oder Rastverbindung manuell durch einen Bedienvorgang lösen, um eine Kippvorgang des Fahrerhauses durchführen zu können, ohne die Versorgungsleitung zu beschädigen und kann den ersten mit dem zweiten Abschnitt manuell verbinden, falls sich das Fahrerhaus nach Beendigung des Kippvorgangs im nicht-gekippten Zustand befindet. Dies bietet den Vorteil, dass keine automatisierte Mechanik oder Steuerung zum Verbinden oder Lösen der Kopplungsteile notwendig ist. Je nach Art der Versorgungsleitung (elektrisch, pneumatisch oder hydraulisch) kann die Art der Steck- und/oder Rastverbindung zweckmäßig ausgeführt sein. Steck- und/oder Rastverbindung für elektrische oder fluidische Leitungen sind an sich aus dem Stand der Technik in unterschiedlichen Ausführungen bekannt und können hier zweckmäßig verwendet werden.

In einer weiteren Ausführungsform kann die Steckverbindung ein am Fahrerhaus angeordnetes erstes Kopplungsteil und ein am Fahrzeug-Chassis angeordnetes zweites Kopplungsteil aufweisen. Die Kopplungsteile können derart angeordnet sein, dass beim Ausführen einer Kippbewegung des Fahrerhauses nach vorne das erste Kopplungsteil automatisch vom zweiten Kopplungsteil getrennt wird. Ferner kann nach Absenken des Fahrerhauses auf das Fahrzeug-Chassis das erste Kopplungsteil automatisch mit dem zweiten Kopplungsteil verbunden werden. In anderen Worten können die Kopplungsteile ohne manuelles Zutun gelöst oder verbunden werden, wenn eine Kippbewegung ausgeführt wird oder das Fahrerhaus abgesenkt wurde. Die Steckverbindung bzw. die Kopplungsteile können konstruktiv beispielweise an eine Kupplung, wie sie zum Beispiel in der Bahntechnik zum Verbinden von Waggons bekannt ist, angelehnt sein. In der Bahntechnik sind automatische Kupplungen zum automatischen Miteinanderverbinden und Trennen von Leitungen bekannt.

Dies bietet den Vorteil, dass bei einem Kippen des Fahrerhauses kein manuelles Entkoppeln (Lösen) der Kopplungsteile notwendig ist und auch bei einem Absenken des Fahrerhauses ein manuelles Verbinden der Kopplungsteile nicht erforderlich ist, sondern automatisch bzw. selbststätig erfolgt.

Beispielsweise kann die Anordnung der Kopplungsteile so ausgeführt sein, dass sich die Kopplungsteile beziehungsweise die zwei Teile der Verbindungseinrichtung in einer geschlossenen Stellung beziehungsweise in einem verbundenen Zustand fluchtend gegenüberstehen und/oder ineinander im Eingriff stehen, z. B. zum Ausbilden einer formschlüssigen Verbindung. Bei einer elektrischen Versorgungsleitung erfolgt im geschlossenen Zustand ferner eine elektrische Kontaktierung des ersten und zweiten Abschnitts.

Gemäß einer weiteren Ausführungsvariante kann die Verbindungseinrichtung, die Steckverbindung oder das erste und/oder das zweite Kopplungsteil eine Lagerung zur zumindest teilweisen Kompensation von im Fahrbetrieb auftretenden Fahrerhausbewegungen relativ zum Fahrzeug-Chassis aufweisen. Ein Fahrerhaus ist bekanntermaßen mittels eine Feder-und/oder-Dämpfermechanismus auf dem Fahrzeug-Chassis gelagert, zur Erhöhung des Komforts für den Fahrer. Das Versehen des ersten und/oder zweiten Kopplungsteil mit einer Lagerung erhöht somit die Sicherheit der Verbindung des ersten und zweiten Abschnitts. Die Lagerung kann entsprechend über einen separaten Federmechanismus, eine Feder-Dämpfer-Anordnung hydraulischer oder pneumatischer Art, als Teil der Verbindungseinrichtung realisiert sein. Die Lagerung kann zumindest in z-Richtung bzw. in Fahrzeughöhenrichtung eine Kompensation von Fahrerhausbewegungen ermöglichen. Die Lagerung kann auch als lineare Lagerung bezeichnet werden.

Das Nutzfahrzeug umfasst ferner eine Sensorik zur Erfassung, ob der erste und zweite Abschnitt über die Verbindungseinrichtung miteinander verbunden sind. Die Sensorik kann zumindest einen der folgenden Sensoren umfassen: einen induktiven Sensor, einen kapazitiven Sensor und einen optischen Sensor. Dies bietet den Vorteil, dass nicht händisch geprüft werden muss, ob die zwei Abschnitte der Verbindungseinrichtung so miteinander verbunden sind, dass eine sichere Übertragung von zum Beispiel Strom möglich ist. Ferner kann ein Ausgabesignal der Sensorik dem Fahrer im Fahrerhaus angezeigt werden. Entsprechend kann der Fahrer direkt im Fahrerhaus dem Verbindungszustand der Versorgungsleitung(en) prüfen, bevor er die Kippeinrichtung betätigt.

Gemäß einem weiteren Aspekt der Erfindung kann die Sensorik in die Verbindungseinrichtung baulich integriert sein. Dies bietet den Vorteil, dass eine kompakte Bauweise der Verbindungseinrichtung ermöglicht wird. Unter baulich integriert kann verstanden werden, dass die Sensorik an der Verbindungseinrichtung außerhalb angebracht wird oder teilweise oder in Gänze in diese hineinragt oder sich komplett innerhalb der Verbindungseinrichtung befindet.

Ferner weist das Nutzfahrzeug eine funktionelle Kopplung zwischen der Kippeinrichtung und der Sensorik auf. Diese ist derart, dass eine Kippbewegung des Fahrerhauses nach vorne mittels der Kippeinrichtung nur dann ermöglicht wird, falls die Sensorik erfasst, dass der erste und der zweite Abschnitt nicht miteinander verbunden sind. Dies bietet den Vorteil, dass eine Kippbewegung bei verbundenem ersten und zweiten Abschnitt wirksam verhindert wird und somit die Sicherheit bei einem Bedienen des Nutzfahrzeugs erhöht wird. Ferner werden hierdurch potentielle Schäden an der Kippmechanik und auch an der Verbindungseinrichtung als solcher vermieden, indem sich entgegenstehende Kräfte verhindert werden.

Ein nicht verbundener erster und zweiter Abschnitt kann, je nach Ausführungsform, gleichzusetzen sein mit einer nicht verbundenen Steckverbindung und damit mit einem nicht verbundenem ersten und zweiten Kopplungsteil.

In einer weiteren Ausführungsform kann die funktionelle Kopplung einen Schalter umfassen, der so angeordnet und/oder angesteuert wird, dass der Schalter zur Unterbrechung einer Stromversorgung einer Kipppumpe oder eines Aktors der Kippeinrichtung automatisch geöffnet wird, falls die Sensorik erfasst, dass der erste und der zweite Abschnitt miteinander verbunden sind, und der automatisch geschlossen wird, falls die Sensorik erfasst, dass der erste und der zweite Abschnitt nicht miteinander verbunden sind.

Eine durch die funktionelle Kopplung gesteuerte Unterbrechung der Stromversorgung der Kipppumpe verhindert somit auf vorteilhafte Weise das fälschliche beziehungsweise irrtümliche Kippen des Fahrerhauses. In einer alternativen Ausführungsform kann die funktionelle Kopplung durch eine Steuerung zur Ansteuerung der Kippeinrichtung realisiert sein, die in Signalverbindung mit der Sensorik steht und die ausgebildet ist, eine Betätigung der Kippeinrichtung nur freizugeben, falls die Sensorik erfasst, dass der erste und der zweite Abschnitt nicht miteinander verbunden sind.

In einer weiteren Ausführungsform der Erfindung kann die Verbindungseinrichtung eine Verriegelung zum wahlweisen automatischen Verriegeln und Entriegeln der Verbindung des ersten und zweiten Abschnitts umfassen. Die Verbindungseinrichtung kann ausgebildet sein zur Ausführung einer Kippbewegung des Fahrerhauses die Verbindung des ersten und zweiten Abschnitts automatisch zu entriegeln. Zusätzlich kann die Verbindungseinrichtung ausgebildet sein nach Absenken des Fahrerhauses auf das Fahrzeug-Chassis die Verbindung des ersten und zweiten Abschnitts automatisch zu verriegeln.

Dies bietet den Vorteil, dass eine ungewollte Öffnung der Verbindungseinrichtung durch die Verriegelung vermieden wird und eine gewollte Öffnung zum Kippen des Fahrerhauses ermöglicht wird. Dies erhöht auf vorteilhafte Weise die Sicherheit, da mit einer zuverlässigen Verbindung der Verbindungseinrichtung im Betrieb gerechnet werden kann und eine Übertragung von zum Beispiel Druckluft, welche etwa für den Betrieb von Sicherheitsrelevanten Bauteilen wie zum Beispiel Bremsen benötigt wird, gewährleistet wird.

Neben der Verriegelung in der Verbindungseinrichtung, die vornehmlich den Zweck erfüllt eine sichere Verbindung der Versorgungsleitung bereitzustellen, kann das Nutzfahrzeug in an sich bekannter Weise eine weitere zweite Verriegelung umfassen, die das Kippen des Fahrerhauses verhindert und für gewöhnlich so konzipiert ist, dass diese hohe Kräfte aufnehmen kann. Ein lösen oder eine gelöste zweite Verriegelung ist demnach grundsätzlich Voraussetzung für das Kippen des Fahrerhauses.

In einer weiteren Ausführungsform kann die Verbindungseinrichtung einen Leitungsabschnitt mit einer Überlänge zum Ausgleich von im Fahrbetrieb auftretenden Fahrerhausbewegungen relativ zum Fahrzeug-Chassis aufweisen. Dies bietet den Vorteil, dass eine notwendige Bewegungsfreiheit der Verbindungseinrichtung gewährleistet wird, sodass die Fahrerhausfederung nicht limitiert wird oder die Verbindungseinrichtung aufgrund unzulässiger Zugkräfte beschädigt würde, bei sich bewegendem Fahrerhaus.

Vorstehend wurde bereits festgestellt, dass die zumindest eine Versorgungsleitung zumindest eine der folgenden Versorgungsleitungen umfassen kann: eine elektrische Versorgungsleitung, eine pneumatische Versorgungsleitung, vorzugsweise eine Druckluftleitung und eine hydraulische Versorgungsleitung. Ferner kann die Verbindungseinrichtung dazu geeignet sein, eine Vielzahl von Versorgungsleitungen miteinander zu verbinden.

Gemäß einem weiteren Aspekt kann die Kippachse an einem vorderen unteren Bereich des Fahrerhauses angeordnet sein, was an sich aus dem Stand der Technik bekannt ist. Die Verbindungseinrichtung ist bevorzugt beabstandet zur Kippachse angeordnet und die mindestens eine Versorgungsleitung ist bevorzugt nicht über die Kippachse geführt. Dies ist insbesondere von Vorteil, weil damit eine Versorgungsleitungsführung erleichtert wird und mehr Raum in einem Frontbereich um die Kippachse herum geschafften wird.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Figuren beschrieben. Es zeigen:
- Figur 1a: eine schematische Darstellung eines Nutzfahrzeugs mit geschlossenem Fahrerhaus gemäß einer ersten Ausführungsvariante;
- Figur 1b: eine schematische Darstellung eines Nutzfahrzeugs mit geöffnetem Fahrerhaus gemäß einer ersten Ausführungsvariante;
- Figur 2a: eine schematische Darstellung eines Nutzfahrzeugs mit geschlossenem Fahrerhaus gemäß einer zweiten Ausführungsvariante;
- Figur 2b: eine schematische Darstellung eines Nutzfahrzeugs mit geöffnetem Fahrerhaus gemäß einer zweiten Ausführungsvariante;
- Figur 3a: eine schematische Darstellung einer geschlossenen Steckverbindung;
- Figur 3b: eine schematische Darstellung einer geöffneten Steckverbindung; und
- Figur 4: eine schematische Skizze einer funktionellen Kopplung.

Gleiche oder funktional äquivalente Elemente sind dabei in allen Figuren mit denselben Bezugszeichen beschrieben und zum Teil nicht gesondert beschrieben.

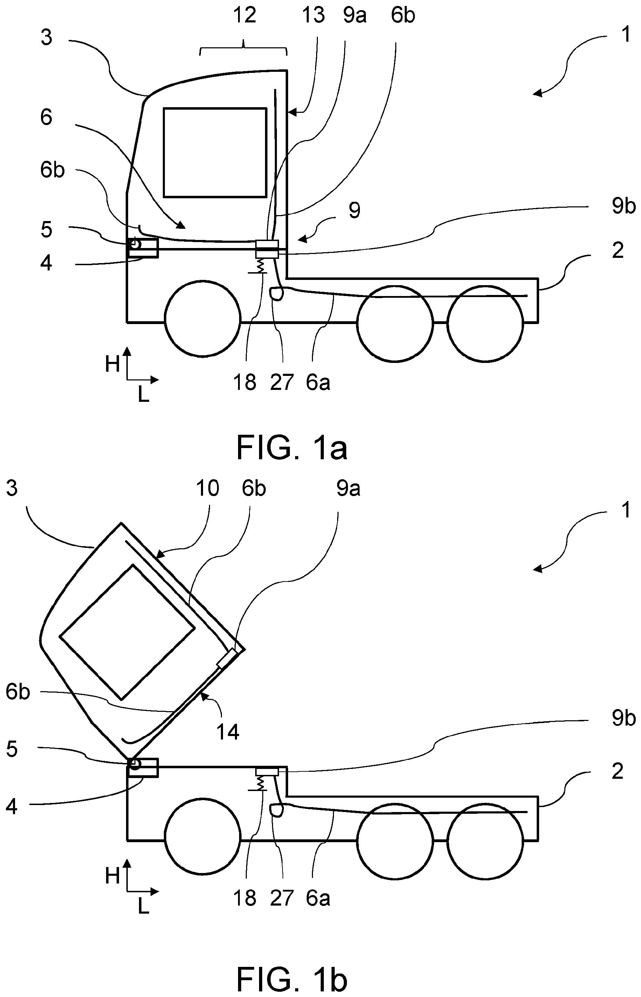

Figur 1a zeigt eine schematische Darstellung eines Nutzfahrzeugs 1 mit kippbarem Fahrerhaus 3 im nicht-gekippten Zustand gemäß einer ersten Ausführungsvariante. Das Nutzfahrzeug 1 umfasst ein Chassis 2, auch Leiterrahmen oder Fahrzeug-Chassis genannt, auf dem das Fahrerhaus 3 kippbar gelagert ist. Die rein schematisch und beispielhaft dargestellte Kippeinrichtung 4 ermöglicht ein Kippen des Fahrerhauses 3 über eine Kippachse 5 nach vorne in Fahrzeuglängsrichtung L (siehe Figur 1b). Derartige Kippeinrichtungen können zum Beispiel hydraulische oder pneumatische Aktoren für das Aufbringen nötiger Kräfte umfassen, die hier allerdings nicht dargestellt sind. Die Kippeinrichtung 4 kann in an sich bekannter Weise ausgeführt sein und ist daher hier nicht näher beschrieben.

Ferner umfasst das Nutzfahrzeug 1 eine Versorgungsleitung 6, die das Fahrerhaus 3 mit dem Chassis 2 verbindet. Die Versorgungsleitung 6 teilt sich in einen ersten Abschnitt 6a im Fahrzeug-Chassis 2 und einen zweiten Abschnitt 6b im Fahrerhaus auf. In dieser beispielhaften Ausführungsvariante weist der zweite Abschnitt 6b eine Verzweigung auf, sodass ein Teil des zweiten Abschnitts 6b etwa parallel entlang eines unteren Bereichs in Fahrzeughöhenrichtung H des Fahrerhauses 3 verläuft und der andere Teil entlang einer Fahrerhausrückseite verläuft. Diese Ausgestaltungsform soll rein beispielhaft darstellen, dass sich die Versorgungsleitung beliebig im Fahrerhaus sowie im Chassis verzweigen oder aufteilen kann, sofern an verschiedenen Positionen im Fahrerhaus oder im Chassis Bedarf für eine Verbindung besteht.

Der erste Abschnitt 6a und der zweite Abschnitt 6b werden über eine Verbindungseinrichtung 9, wie in Figur 1a dargestellt, verbunden. Die Verbindungseinrichtung 9 befindet sich in einem Bereich an einer Unterseite 14 und in Bezug auf die Fahrzeuglängsrichtung L in einer hinteren Hälfte 12 des Fahrerhauses 3 und an einer Oberseite des Chassis. Hierfür wird ein fahrerhausseitiger Teil 9a an der Unterseite 14 des Fahrerhauses 3 und ein chassisseitiger Teil 9b am Chassis 2 der Verbindungseinrichtung 9 angeordnet. Die zwei Teile 9a und 9b stehen sich in diesem Beispiel fluchtend gegenüber, wobei auch andere konstruktive Formen möglich sind.

Damit kann die Verbindungseinrichtung 9 die Versorgungsleitungsteile 6a und 6b wahlweise so verbinden, dass ein Übertragen von zum Beispiel Strom oder Druckluft aus dem Fahrerhaus 3 in das Chassis 2 oder andersherum ermöglicht wird und die Leitungsführung nicht, wie dies üblich ist, über die Kippeinrichtung verläuft.

Diese konstruktive Ausgestaltungsform ist besonders vorteilhaft, da die Leitungsführung verkürzt werden kann und dabei Platz in einem vorderen Bereich in der Nähe der Kippachse 5 geschaffen wird, der zum Beispiel für mehr Komfort für den Fahrer genutzt oder mit anderen Bauteilen vorteilhaft besetzt werden kann. Die Verbindungseinrichtung kann auch mehrere Versorgungsleitungen 6 (hier nicht dargestellt) verschiedener Art, zum Beispiel Strom und Druckluft, jeweils miteinander verbinden.

Ferner wird in diesem Beispiel der chassisseitige Teil 9b mit einer Lagerung 18 versehen, sodass in einem normalen Fahrbetrieb Relativbewegungen zwischen Fahrerhaus 3 und Chassis 2 von der Verbindungseinrichtung 9 ausgeglichen werden können. Für diesen Ausgleich ist in diesem Beispiel ein Leitungsabschnitt 27 mit Überlänge im ersten Abschnitt 6a vorgesehen, damit sich der erste Abschnitt 6a auf der Seite der Lagerung 18 bewegen kann.

Figur 1b zeigt eine schematische Darstellung eines Nutzfahrzeugs 1 mit gekipptem Fahrerhaus 3 gemäß der ersten beispielhaften Ausführungsvariante. Die Verbindungseinrichtung 9 ermöglicht ein Trennen der Abschnitte 6a und 6b, sodass das Fahrerhaus 3 trotz einer nicht über die Kippachse 5 verlaufenden Leitungsführung kippbar ist, wie dies in Figur 1b dargestellt ist.

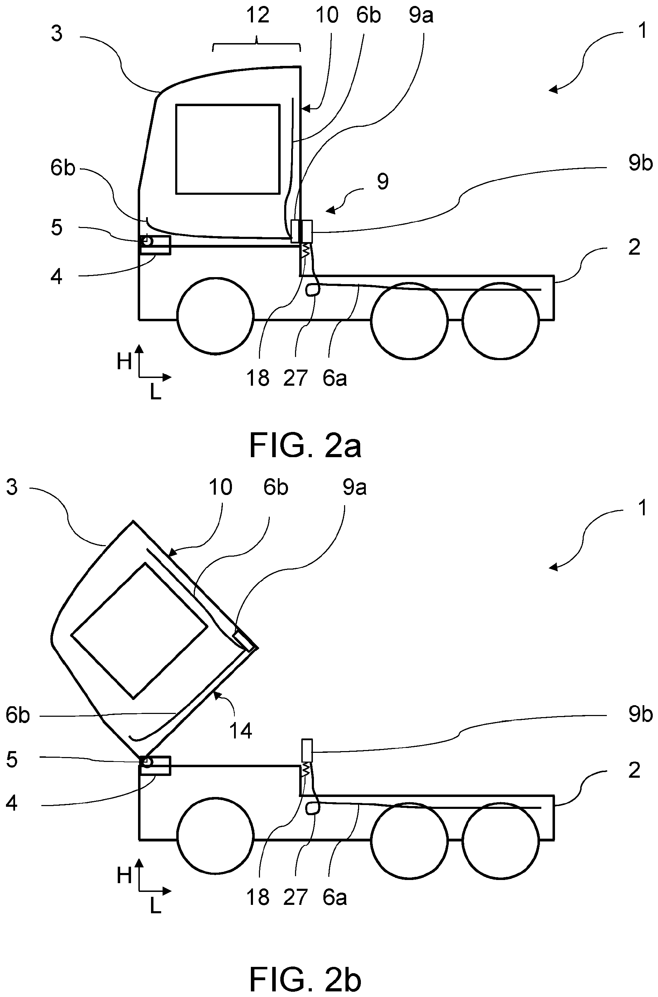

Figur 2a zeigt eine schematische Darstellung eines Nutzfahrzeugs 1 mit nicht-gekipptem Fahrerhaus 3 gemäß einer zweiten beispielhaften Ausführungsvariante. Die in den Figuren 2a und 2b gezeigte Ausführungsform unterscheidet sich von den in den Figuren 1a und 1b dargestellten Variante durch eine andere Platzierung der Verbindungseinrichtung 9 am Fahrerhaus 3. Um Wiederholungen zu vermeiden wird daher folgend nur auf diese Unterscheidung eingegangen.

Wie in Figur 2a zu sehen ist, ist die Verbindungseinrichtung 9 an der Fahrerhausrückseite 13 angeordnet. Entsprechend ist die Lagerung 18 an einer Außenseite des Fahrzeug-Chassis 2 angebracht. Diese Anordnung weist gegenüber der ersten Variante aus den Figuren 1a und 1b den Vorteil auf, dass die Lagerung 18 mit mehr Bewegungsfreiheit versehen werden kann, leicht zugänglich ist und generell mehr Platz für eine Realisierung der Verbindungseinrichtung 9 vorhanden ist. Ähnlich wie in den Figuren 1a und 1b ist die Leitungsführung und auch die Kippeinrichtung rein beispielhaft beziehungsweise schematisch dargestellt.

Figur 2b zeigt eine schematische Darstellung des Nutzfahrzeugs 1 mit geöffnetem Fahrerhaus 3 gemäß der zweiten Ausführungsvariante. In geöffneter Position ragt der chassiseitige Teil 9b der Verbindungseinrichtung 9 etwas über die Ebene zwischen Fahrerhaus und Chassis hinaus.

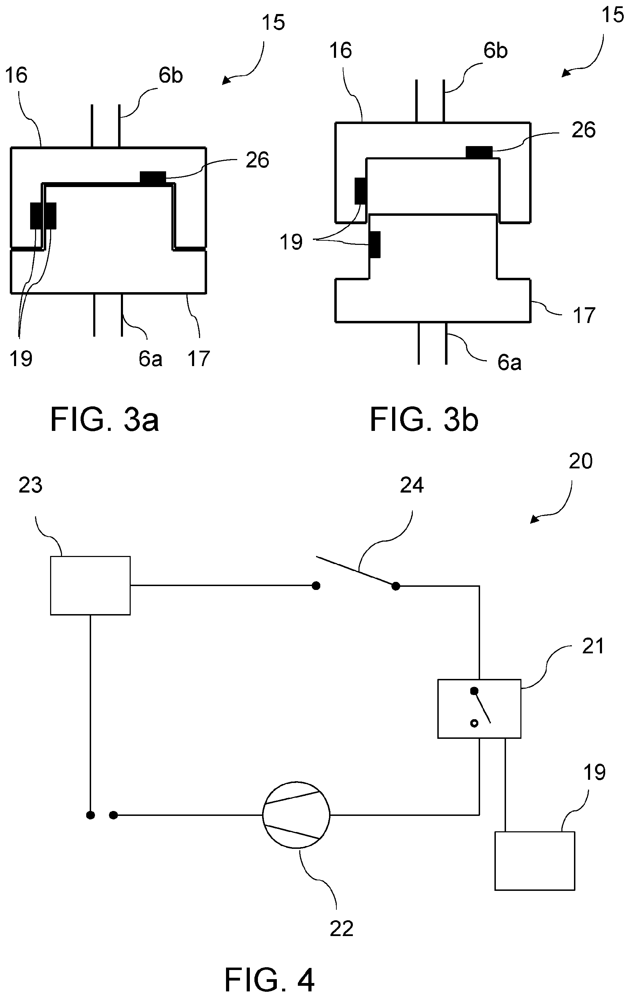

Die Verbindungseinrichtung 9 kann eine Steckverbindung 15 zum lösbaren Miteinander-Verbinden des ersten und zweiten Abschnitts aufweisen. Figur 3a zeigt hierzu eine schematische Darstellung einer geschlossenen Steckverbindung 15, gemäß einer beispielhaften Ausführung. Die Steckverbindung 15 besteht aus einem ersten Kopplungsteil 16 und einem zweiten Kopplungsteil 17. Die Kopplungsteile 16, 17 sind derart ausgeführt, dass diese ineinandergreifen und in dem dargestellten geschlossenen Zustand den in das erste Kopplungsteil 16 eingehende zweite Abschnitt 6b der Versorgungsleitung 6 mit dem in das zweite Kopplungsteil 17 eingehenden ersten Abschnitt 6a verbinden. Je nach Art der Versorgungsleitung ist dabei die Steckverbindung zweckmäßig so auszuführen, dass die Steckverbindung eine elektrische Kontaktierung der Kopplungsteile 16, 17 ermöglicht (bei einer elektrischen Verbindung) oder eine fluidische leitende, dichte Verbindung der Kopplungsteile (bei einer fluidischen Versorgungsleitung).

Ferner ist sowohl an beiden Kopplungsteilen 16, 17 eine Sensorik 19 verbaut, die erfasst, ob die Kopplungsteile 16, 17 im miteinander-verbundenen Zustand sind. In dem gezeigten Beispiel stehen sich die Komponenten der Sensorik 19 im geschlossenen Zustand fluchtend gegenüber, sodass ein Signal erzeugt wird, dass die Kopplungsteile 16, 17 geschlossen sind. Die Sensorik könnte auch alternativ oder zusätzlich einen Stromfluss zwischen den Abschnitten 6a, 6b, messen, sodass auf eine geschlossene Stellung der Kopplungsteile 16, 17 geschlossen werden kann. Auch weitere, hier nicht dargestellte Messmethoden optischer oder elektronischer Art sind möglich.

Ferner ist optional eine mechanische Verriegelung 26 in der Steckverbindung 15 integriert, die ein mechanisches auseinandergleiten der Kopplungsteile 16, 17 verhindert, wenn dies nicht gewollt ist. Die Verriegelung 26 kann beispielhaft ein Elektromagnet sein, der eingeschaltet ist, wenn die Verriegelung 26 aktiv sein soll und der ausgeschaltet werden kann, wenn die Kopplungsteile 16, 17 getrennt werden sollen. Im eingeschalteten Zustand hält in diesem Beispiel der Elektromagnet die Kopplungsteile 16, 17 beieinander. Ferner sind auch rein mechanische oder sonstige gängige Verriegelungsmechanismen möglich.

Figur 3b zeigt eine geöffnete Steckverbindung 15. Die Komponenten der gezeigten Sensorik 19 sind nun zueinander verschoben, sodass die Sensorik 19 ein Signal erzeugt, dass die Kopplungsteile 16, 17 getrennt sind. Ferner ist Verriegelung 26 nicht aktiv.

Die dargestellte Form der Kopplungsteile 16, 17 in den Figuren 3a und 3b ist stark vereinfacht und schematisch dargestellt. Auch andere Formen, die zweckmäßig dieselbe Funktion erfüllen, sind denkbar. Auch kann die Form der Kopplungsteile 16, 17 derart ausgestaltet sein, dass diese eine selbstzentrierende Form besitzen, wenn diese ineinander gleiten oder greifen.

Figur 4 zeigt eine schematische Skizze einer funktionellen Kopplung 20. Die funktionelle Kopplung 20 erfüllt den Zweck, ein Kippen des Fahrerhauses im nicht-gekippten Zustand mittels der Kippeinrichtung 4 zu verhindern, wenn eine Trennung der Kopplungsteile 16, 17 noch nicht erfolgt ist und eine Kippbewegung zuzulassen, wenn die Kopplungsteile 16, 17 bereits getrennt wurden.

Hierfür umfasst die funktionelle Kopplung 20 einen Schalter 21, der in Signalverbindung mit der Sensorik 19 steht und in geöffneter Stellung ist, wenn die Sensorik erfasst, dass die Kopplungsteile 16, 17 geschlossen sind. Erst wenn die Sensorik 19 signalisiert, dass die Kopplungsteile 16, 17 getrennt sind, stellt der Schalter 21 automatisch in eine leitende Stellung. Ferner umfasst die funktionelle Kopplung 20 eine Kipppumpe 22, einen Freigabeschalter 23 und einen Kipppumpenschalter 24. Falls ein Kippen des Fahrerhauses 3 über die Kippeinrichtung 4, welche in diesem Beispiel über die Kipppumpe 22 mit der dafür notwendigen Energie versorgt wird, gewünscht ist, wird der Freigabeschalter 23 manuell von einem Anwender betätigt. Daraufhin wird der Kipppumpenschalter 24 auf leitend gestellt. Wenn nun der Schalter 21 auch leitet, ist der Stromkreis geschlossen und die Kipppumpe 22 wird mit Strom versorgt, um das Fahrerhaus 3 zu kippen. Die Verriegelung 26 wird in diesem Beispiel in dem Fall, dass der Freigabeschalter 23 betätigt wird, automatisch gelöst. Dies ist besonders vorteilhaft, da keine manuellen Handgriffe nötig sind, die Verriegelung vor einem Kippen zu öffnen. In der in Figur 4 dargestellten funktionellen Kopplung 20 ist der Schalter 21 und der Kipppumpenschalter 24 nicht leitend beispielhaft dargestellt. Alternativ zum automatisierten Lösen kann die Verriegelung 26 auch manuell gelöst werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Die Erfindung wird ausschließlich durch die beigefügten Ansprüche definiert.

### Bezugszeichenliste:

- 1: Nutzfahrzeug
- 2: Fahrzeug-Chassis
- 3: Fahrerhaus
- 4: Kippeinrichtung
- 5: Kippachse
- 6: Versorgungsleitung
- 6a: Erster Abschnitt
- 6b: Zweiter Abschnitt
- 9: Verbindungseinrichtung
- 9a: Fahrerhausseitiger Teil der Verbindungseinrichtung
- 9b: Chassisseitiger Teil der Verbindungseinrichtung
- 12: Hintere Hälfte des Fahrerhauses
- 13: Fahrerhausrückseite
- 14: Unterseite des Fahrerhauses
- 15: Steckverbindung
- 16: Erstes Kopplungsteil
- 17: Zweites Kopplungsteil
- 18: Lagerung
- 19: Sensorik
- 20: Funktionelle Kopplung
- 21: Schalter
- 22: Kipppumpe
- 23: Freigabeschalter
- 24: Kipppumpenschalter
- 26: Verriegelung
- 27: Leitungsabschnitt
- H: Fahrzeughöhenrichtung
- L: Fahrzeuglängsrichtung

## Patentansprüche

1. Nutzfahrzeug (1), umfassend ein Fahrzeug-Chassis (2); ein Fahrerhaus (3); und eine Kippeinrichtung (4), mittels der das Fahrerhaus (3) über eine Kippachse (5) auf dem Chassis (2) für Wartungs- , Reparatur- und/oder Montagearbeiten kippbar gelagert ist; mindestens eine Versorgungsleitung (6), aufweisend einen ersten Abschnitt (6a), der am Fahrzeug-Chassis (2) angeordnet ist, und einen zweiten Abschnitt (6b), der am Fahrerhaus (3) angeordnet ist; eine Verbindungseinrichtung (9) zum lösbaren Miteinander-Verbinden des ersten und zweiten Abschnitts (6a, 6b), wobei ein fahrerhausseitiger Teil (9a) der Verbindungseinrichtung (9) in einer hinteren Hälfte (12), vorzugsweise in einem hinteren Drittel, des Fahrerhauses (3) angeordnet ist; und eine Sensorik (19) zur Erfassung, ob der erste und zweite Abschnitt (6a, 6b) über die Verbindungseinrichtung (9) miteinander verbunden sind, **dadurch gekennzeichnet, dass**
das Nutzfahrzeug (1) ferner eine funktionelle Kopplung (20) zwischen der Kippeinrichtung (4) und der Sensorik (19) aufweist, derart, dass eine Kippbewegung des Fahrerhauses (3) nach vorne mittels der Kippeinrichtung (4) nur dann ermöglicht wird, falls die Sensorik (19) erfasst, dass der erste und der zweite Abschnitt (6a, 6b) nicht miteinander verbunden sind.

2. Nutzfahrzeug (1) nach Anspruch 1, wobei der fahrerhausseitige Teil (9a) der Verbindungseinrichtung (9) an einer Fahrerhausrückseite (13), vorzugsweise an einem unteren Endbereich der Fahrerhausrückseite (13); oder an einer Unterseite (14) des Fahrerhauses (3) angeordnet ist.

3. Nutzfahrzeug nach Anspruch 1 oder 2, wobei die Verbindungseinrichtung (9) eine Steck- und/oder Rastverbindung (15) zum lösbaren Miteinander-Verbinden des ersten und zweiten Abschnitts (6a, 6b) umfasst.

4. Nutzfahrzeug (1) nach Anspruch 3, wobei die Steckverbindung (15) ein am Fahrerhaus (3) angeordnetes erstes Kopplungsteil (16) und ein am Fahrzeug-Chassis (2) angeordnetes zweites Kopplungsteil (17) aufweist, die derart angeordnet sind, dass beim Ausführen einer Kippbewegung des Fahrerhauses (3) nach vorne das erste Kopplungsteil (16) automatisch vom zweiten Kopplungsteil (17) getrennt wird und dass nach Absenken des Fahrerhauses (3) auf das Fahrzeug-Chassis (2) das erste Kopplungsteil (16) automatisch mit dem zweiten Kopplungsteil (17) verbunden wird.

5. Nutzfahrzeug (1) nach Anspruch 4, wobei das erste oder das zweite Kopplungsteil (16, 17) eine Lagerung (18) zur zumindest teilweisen Kompensation von im Fahrbetrieb auftretenden Fahrerhausbewegungen relativ zum Fahrzeug-Chassis (2) aufweist.

6. Nutzfahrzeug (1) nach einem der vorhergehenden Ansprüche, wobei die Sensorik (19) in die Verbindungseinrichtung (9) baulich integriert ist.

7. Nutzfahrzeug (1) nach einem der vorhergehenden Ansprüche, wobei die funktionelle Kopplung (20)
a) einen Schalter (21) umfasst, der zur Unterbrechung einer Stromversorgung einer Kipppumpe (22) der Kippeinrichtung (4) automatisch geöffnet wird, falls die Sensorik (19) erfasst, dass der erste und der zweite Abschnitt (6a, 6b) miteinander verbunden sind, und der automatisch geschlossen wird, falls die Sensorik (19) erfasst, dass der erste und der zweite Abschnitt (6a, 6b) nicht miteinander verbunden sind, oder
b) durch eine Steuerung zur Ansteuerung der Kippeinrichtung (4) realisiert ist, die in Signalverbindung mit der Sensorik (19) steht und die ausgebildet ist, eine Betätigung der Kippeinrichtung (4) nur freizugeben, falls die Sensorik (19) erfasst, dass der erste und der zweite Abschnitt (6a, 6b) nicht miteinander verbunden sind.

8. Nutzfahrzeug (1) nach einem der vorherigen Ansprüche, wobei die Verbindungseinrichtung (9) eine Verriegelung (26) zum wahlweisen automatischen Verriegeln und Entriegeln der Verbindung des ersten und zweiten Abschnitts (6a, 6b) umfasst, wobei die Verbindungseinrichtung (9) ausgebildet ist,
a) zur Ausführung einer Kippbewegung des Fahrerhauses (3) die Verbindung des ersten und zweiten Abschnitts (6a, 6b) automatisch zu entriegeln, und
b) nach Absenken des Fahrerhauses (3) auf das Fahrzeug-Chassis (2) die Verbindung des ersten und zweiten Abschnitts (6a, 6b) automatisch zu verriegeln.

9. Nutzfahrzeug (1) nach einem der vorherigen Ansprüche, wobei die Verbindungseinrichtung (9) einen Leitungsabschnitt (27) mit einer Überlänge aufweist, zum Ausgleich von im Fahrbetrieb auftretenden Fahrerhausbewegungen relativ zum Fahrzeug-Chassis (2).

10. Nutzfahrzeug (1) nach einem der vorherigen Ansprüche, wobei die zumindest eine Versorgungsleitung (6) zumindest eine der folgenden Versorgungsleitungen umfasst: eine elektrische Versorgungsleitung und eine pneumatische Versorgungsleitung, vorzugsweise eine Druckluftleitung und/oder wobei die Kippachse (5) an einem vorderen unteren Bereich des Fahrerhauses (3) angeordnet ist.

11. Nutzfahrzeug (1) nach einem der vorherigen Ansprüche, wobei die Verbindungseinrichtung (9) beabstandet zur Kippachse (5) angeordnet ist und/oder wobei die mindestens eine Versorgungsleitung (6) nicht über die Kippachse (5) geführt ist.

## Claims

1. Commercial vehicle (1), comprising a vehicle chassis (2); a cab (3); and a tilting device (4), by means of which the cab (3) is tiltably mounted on the chassis (2) about a tilting axis (5) for maintenance, repair, and/or assembly work; at least one supply line (6), comprising a first section (6a) which is arranged on the vehicle chassis (2), and a second section (6b) which is arranged on the cab (3); a connection device (9) for releasably connecting the first and second sections (6a, 6b) to one another, wherein a cab-side part (9a) of the connection device (9) is arranged in a rear half (12), preferably in a rear third, of the cab (3); and a sensor system (19) for detecting whether the first and second sections (6a, 6b) are connected to one another via the connection device (9), **characterized in that**
the commercial vehicle (1) further comprises a functional coupling (20) between the tilting device (4) and the sensor system (19), such that a tilting movement of the cab (3) forward by means of the tilting device (4) is only enabled if the sensor system (19) detects that the first and the second section (6a, 6b) are not connected to one another.

2. Commercial vehicle (1) according to claim 1, wherein the cab-side part (9a) of the connection device (9) is arranged on a cab rear side (13), preferably in a lower end region of the cab rear side (13); or is arranged on an underside (14) of the cab (3).

3. Commercial vehicle according to claim 1 or 2, wherein the connection device (9) comprises a plug and/or snap connection (15) for releasably connecting the first and second sections (6a, 6b) to one another.

4. Commercial vehicle (1) according to claim 3, wherein the plug connection (15) comprises a first coupling part (16) arranged on the cab (3) and a second coupling part (17) arranged on the vehicle chassis (2), which are arranged such that, when carrying out a tilting movement of the cab (3) forward, the first coupling part (16) is automatically separated from the second coupling part (17), and that after lowering the cab (3) onto the vehicle chassis (2) the first coupling part (16) is automatically connected to the second coupling part (17).

5. Commercial vehicle (1) according to claim 4, wherein the first or the second coupling part (16, 17) comprises a bearing (18) for at least partial compensation of cab movements relative to the vehicle chassis (2) occurring during driving operation.

6. Commercial vehicle (1) according to one of the preceding claims, wherein the sensor system (19) is structurally integrated in the connection device (9).

7. Commercial vehicle (1) according to one of the preceding claims, wherein the functional coupling (20)
a) comprises a switch (21), which is automatically opened to interrupt a power supply of a tilting pump (22) of the tilting device (4) if the sensor system (19) detects that the first and the second section (6a, 6b) are connected to one another, and which is automatically closed if the sensor system (19) detects that the first and the second section (6a, 6b) are not connected to one another, or
b) is realized by a control unit for actuating the tilting device (4), which is in signal connection with the sensor system (19) and which is configured to release an actuation of the tilting device (4) only if the sensor system (19) detects that the first and the second section (6a, 6b) are not connected to one another.

8. Commercial vehicle (1) according to one of the preceding claims, wherein the connection device (9) comprises a locking device (26) for selectively automatically locking and unlocking the connection of the first and second sections (6a, 6b), wherein the connection device (9) is configured
a) to automatically unlock the connection of the first and second sections (6a, 6b) in order to carry out a tilting movement of the cab (3), and
b) to automatically lock the connection of the first and second sections (6a, 6b) after lowering the cab (3) onto the vehicle chassis (2).

9. Commercial vehicle (1) according to one of the preceding claims, wherein the connection device (9) comprises a line section (27) with an excess length for compensating cab movements relative to the vehicle chassis (2) occurring during driving operation.

10. Commercial vehicle (1) according to one of the preceding claims, wherein the at least one supply line (6) comprises at least one of the following supply lines: an electric supply line and a pneumatic supply line, preferably a compressed-air line, and/or wherein the tilting axis (5) is arranged in a front lower region of the cab (3).

11. Commercial vehicle (1) according to one of the preceding claims, wherein the connection device (9) is arranged at a distance from the tilting axis (5) and/or wherein the at least one supply line (6) is not routed over the tilting axis (5).

## Revendications

1. Véhicule utilitaire (1), comprenant un châssis de véhicule (2) ; une cabine de conduite (3) ; et un dispositif de basculement (4) au moyen duquel la cabine de conduite (3) est montée de manière basculante sur le châssis (2) par le biais d'un axe de basculement (5) pour des travaux de maintenance, de réparation et/ou de montage ; au moins une ligne d'alimentation (6), possédant une première portion (6a) qui disposée sur le châssis de véhicule (2) et une deuxième portion (6b) qui est disposée sur la cabine de conduite (3) ; un dispositif de raccordement (9) destiné à raccorder ensemble de manière amovible les première et deuxième portions (6a, 6b), une partie côté cabine de conduite (9a) du dispositif de raccordement (9) étant disposée dans une moitié arrière (12), de préférence dans un tiers arrière, de la cabine de conduite (3) ; et un système de capteurs (19) destiné à détecter si les première et deuxième portions (6a, 6b) sont reliées entre elles par le biais du dispositif de raccordement (9), **caractérisé en ce que**
le véhicule utilitaire (1) possède en outre un accouplement fonctionnel (20) entre le dispositif de basculement (4) et le système de capteurs (19), de telle sorte qu'un mouvement de basculement vers l'avant de la cabine de conduite (3) au moyen du dispositif de basculement (4) n'est rendu possible que si le système de capteurs (19) détecte que les première et deuxième portions (6a, 6b) ne sont pas reliées entre elles.

2. Véhicule utilitaire (1) selon la revendication 1, la partie côté cabine de conduite (9a) du dispositif de raccordement (9) étant disposée sur un côté arrière de cabine de conduite (13), de préférence au niveau d'une zone d'extrémité inférieure du côté arrière de cabine de conduite (13) ; ou au niveau d'un côté inférieur (14) de la cabine de conduite (3).

3. Véhicule utilitaire selon la revendication 1 ou 2, le dispositif de raccordement (9) comprenant une liaison par enfichage et/ou par encliquetage (15) destinée à raccorder ensemble de manière amovible les première et deuxième portions (6a, 6b).

4. Véhicule utilitaire (1) selon la revendication 3, la liaison par enfichage (15) possédant une première partie d'accouplement (16) disposée au niveau de la cabine de conduite (3) et une deuxième partie d'accouplement (17) disposée au niveau du châssis de véhicule (2), lesquelles sont disposées de telle sorte que, lors de l'exécution d'un mouvement de basculement de la cabine de conduite (3) vers l'avant, la première partie d'accouplement (16) est automatiquement séparée de la deuxième partie d'accouplement (17) et que, lors de l'abaissement de la cabine de conduite (3) sur le châssis de véhicule (2), la première partie d'accouplement (16) est automatiquement reliée à la deuxième partie d'accouplement (17).

5. Véhicule utilitaire (1) selon la revendication 4, la première ou la deuxième partie d'accouplement (16, 17) possédant un palier (18) destiné à compenser au moins partiellement les mouvements de la cabine de conduite par rapport au châssis de véhicule (2) qui se produisent en régime de transbordement.

6. Véhicule utilitaire (1) selon l'une des revendications précédentes, le système de capteurs (19) étant intégré dans la structure du dispositif de raccordement (9).

7. Véhicule utilitaire (1) selon l'une des revendications précédentes, l'accouplement fonctionnel (20)
a) comportant un commutateur (21), qui est automatiquement ouvert pour interrompre une alimentation électrique d'une pompe de basculement (22) du dispositif de basculement (4) dans le cas où le système de détection (19) détecte que les première et deuxième portions (6a, 6b) sont reliées entre elles, et qui est automatiquement fermé lorsque le système de détection (19) détecte que les première et deuxième portions (6a, 6b) ne sont pas reliées entre elles, ou
b) étant réalisé par une commande destinée à commander le dispositif de basculement (4), qui est en liaison de signal avec le système de capteurs (19) et qui est configurée pour n'autoriser un actionnement du dispositif de basculement (4) que si le système de capteurs (19) détecte que les première et deuxième portions (6a, 6b) ne sont pas reliées entre elles.

8. Véhicule utilitaire (1) selon l'une des revendications précédentes, le dispositif de raccordement (9) comportant un verrouillage (26) destiné à verrouiller et déverrouiller automatiquement de manière sélective la liaison entre les première et deuxième portions (6a, 6b), le dispositif de raccordement (9) étant configuré
a) déverrouiller automatiquement la liaison entre les première et deuxième portions (6a, 6b) en vue d'exécuter un mouvement de basculement de la cabine de conduite (3), et
b) après l'abaissement de la cabine de conduite (3) sur le châssis de véhicule (2), verrouiller automatiquement la liaison entre les première et deuxième portions (6a, 6b) .

9. Véhicule utilitaire (1) selon l'une des revendications précédentes, le dispositif de raccordement (9) possédant une portion de conduite (27) avec une surlongueur afin de compenser les mouvements de la cabine de conduite par rapport au châssis de véhicule (2) qui se produisent en régime de transbordement.

10. Véhicule utilitaire (1) selon l'une des revendications précédentes, l'au moins une ligne d'alimentation (6) comportant au moins l'une des lignes d'alimentation suivantes : une ligne d'alimentation électrique et une ligne d'alimentation pneumatique, de préférence une conduite d'air comprimé et/ou l'axe de basculement (5) étant disposé dans une zone inférieure avant de la cabine de conduite (3).

11. Véhicule utilitaire (1) selon l'une des revendications précédentes, le dispositif de raccordement (9) étant disposé à distance de l'axe de basculement (5) et/ou l'au moins une ligne d'alimentation (6) ne cheminant pas par l'axe de basculement (5).
